# FASCICULE DE BREVET EUROPEEN

(11) **EP 3 057 789 B1**
(45) Date de publication et mention de la délivrance du brevet: **26.07.2017**
(21) Numéro de dépôt: 14784436.9
(22) Date de dépôt: 14.10.2014
(51) Int. Cl.: B32B 17/10, F16B 17/00, C03C 27/12

(54) **PROCEDE POUR LA FERMETURE ETANCHE D'UN CONTENANT DESTINE A ETRE DEPRESSURISE**
VERFAHREN FÜR DEN VERSIEGELTEN VERSCHLUSS EINES BEHÄLTERS ZUR DRUCKHERABSETZUNG
METHOD FOR SEALED CLOSURE OF A CONTAINER THAT IS INTENDED TO BE DEPRESSURISED

(30) Priorité: 17.10.2013 BE 201300696
(43) Date de publication de la demande: 24.08.2016
(73) Titulaire: Simtech S.P.R.L., 7503 Froyennes (BE); System Res, 59670 Winnezeele (FR)
(72) Inventeur: VANDROMME, Pascal, F-59830 Cysoing (FR); TOULISSE, Emmanuel, F-59670 Winnezeele (FR)
(74) Mandataire: Balesta, Pierre
(86) Numéro de dépôt international: PCT/EP2014/071969
(87) Numéro de publication internationale: WO 2015/055621

(56) Documents cités:
- FR-A1- 2 776 344

## Description

La présente invention se rapporte, d'une manière générale, à un procédé pour la fermeture étanche d'un contenant à parois souples destiné à être dépressurisé ainsi qu'à un dispositif pour sa mise en oeuvre.

Plus particulièrement, l'invention concerne un procédé pour la fermeture étanche d'un contenant autonome à parois souples destiné à être dépressurisé, du genre constitué de deux feuilles superposées et assemblées de manière étanche selon une paire de bords et présentant au moins une fente de chargement et de déchargement formée entre au moins une paire de bords libres et sensiblement parallèles de ces feuilles, chaque paire de bords libres comprenant, situés en regard l'un de l'autre, un bord de chacune de ces feuilles, ce contenant comprenant un moyen de maintien desdites feuilles en appui étanche entre elles lequel est disposé sur leurs faces internes, parallèle aux bords libres qui déterminent la ou les fentes de chargement et de déchargement et à proximité de ceux-ci.

La fabrication de verre laminé se pratique habituellement en insérant les matériaux à assembler dans une poche souple de feuilletage puis en effectuant le vide à l'intérieur de celle-ci. Cette poche est alors placée en autoclave et portée à une température de 130° à 150°C sous une pression d'environ 8 bars.

On a décrit dans la demande de brevet FR 2776344 un dispositif de fermeture étanche d'une poche à paroi souple destinée à être dépressurisée en vue d'y réaliser le feuilletage de matériaux. Cette poche, qui est constituée de deux feuilles superposées et assemblées de manière étanche, comporte une fente de chargement et de déchargement ainsi qu'un dispositif de fermeture comprenant un moyen de maintien élastique des deux feuilles en appui étanche entre elles. Ce moyen est constitué de deux pièces l'une de configuration mâle l'autre de configuration femelle. Lors d'une fermeture de la poche, ces pièces coopèrent par emboitement sous l'effet d'une pression exercée sur les faces extérieures de cette poche.

Une poche munie du dispositif de fermeture ainsi décrit est amenée à devoir être utilisée à de nombreuses reprises. En conséquence, les deux pièces constitutives du dispositif seront soumises à des emboitements et déboitements répétés qui occasionneront, à la longue, un inévitable manque d'étanchéité en raison du frottement auquel ces pièces seront soumises.

La présente invention a pour but de proposer un procédé, du type indiqué précédemment, capable de pallier cet inconvénient en ce qu'il permet de réaliser une fermeture extrêmement efficace d'un contenant à parois souples destiné à être dépressurisé, par exemple une poche destinée au feuilletage de matériaux, ce procédé pouvant assurer et maintenir l'étanchéité souhaitée de la fermeture de ce contenant même après de nombreuses ouvertures et fermetures de celui-ci.

Pour atteindre ce but, le procédé selon l'invention est caractérisé en ce que l'on dépressurise un ou plusieurs conduits créés dans ledit moyen d'étanchéité lorsque celui-ci est en position de travail, c'est-à-dire lorsqu'il assure la fermeture dudit contenant.

Selon une autre caractéristique de l'invention, la dépressurisation du ou des conduits est obtenue conjointement avec la dépressurisation du contenant ou séparément de celle-ci.

Selon un autre de ses objets, l'invention se rapporte à un dispositif pour la mise en oeuvre de la méthode décrite précédemment.

Ainsi, l'invention se rapporte également à un dispositif de fermeture étanche d'un contenant à parois souples destiné à être dépressurisé, par exemple une poche destinée au feuilletage de matériaux, du genre constitué de deux feuilles superposées et assemblées de manière étanche selon une paire de bords et présentant au moins une fente de chargement et de déchargement formée entre au moins une paire de bords libres et sensiblement parallèles de ces feuilles, chaque paire de bords libres comprenant, situés en regard l'un de l'autre, un bord de chacune de ces feuilles, ce contenant comprenant un moyen de maintien desdites feuilles en appui étanche entre elles lequel est disposé sur leurs faces internes, parallèle aux bords libres qui déterminent la ou les fentes de chargement et de déchargement et à proximité de ceux-ci.

Selon l'invention, ce dispositif est caractérisé en ce que le moyen d'étanchéité, en position de travail, est parcouru par un ou plusieurs conduits aptes à être dépressurisés lorsqu'ils sont reliés à une source de dépressurisation.

Selon une autre caractéristique de l'invention, le moyen d'étanchéité comprend un premier profilé longiligne comportant une face d'appui et un second profilé longiligne comportant une face d'appui parcourue, en position de repos, c'est-à-dire lorsqu'il n'assure pas la fermeture du contenant, par une ou plusieurs rainures longilignes qui, lorsque ces faces d'appui coopèrent entre elles, créent le ou lesdits conduits de dépressurisation.

Ces profilés ont une longueur sensiblement équivalente à la longueur des bords de la fente et sont habituellement réalisés en une matière souple, de préférence élastiquement déformable, telle que par exemple le caoutchouc naturel ou synthétique ou encore le silicone.

Le dispositif, selon l'invention, peut équiper une paire de bords libres du contenant ou deux paires de bords libres, de préférence adjacents, ou encore trois paires de bords libres, les bords de la quatrième paire étant solidarisés entre eux à demeure. Une telle configuration peut être adoptée, par exemple, lorsque la source de dépressurisation du ou des conduits est indépendante de celle qui est envisagée pour la dépressurisation de la poche.

De manière à assurer le contact optimal entre les faces d'appui des deux profilés lorsqu'elles coopèrent entre elles, le profil transversal des portions de face d'appui du second profilé situées de part et d'autre de la ou des rainures est complémentaire du profil transversal des portions correspondantes de la face d'appui du premier profilé. Par « profil transversal d'un profilé », on entend ci-dessus le profil obtenu après section selon un plan de coupe perpendiculaire au bord du contenant parallèle à ce profilé.

Au surplus, lorsque les deux profilés occupent une position de travail, c'est-à-dire lorsqu'ils assurent la fermeture du contenant, la face d'appui du premier profilé se trouve en contact intime avec la totalité de la face d'appui du second profilé à l'exception toutefois de la surface interne de la ou des rainures pratiquées dans ce second profilé, ce qui crée le ou les conduits de dépressurisation.

La face d'appui des premier et second profilés peut être plane. Toutefois, selon un mode de réalisation préféré, la face d'appui du premier profilé présente une ou plusieurs zones d'extension délimitant autant d'excroissances surmontant ce profilé ou une ou plusieurs zones de retrait délimitant autant d'évidements à l'intérieur de ce profilé ou encore un ensemble de zones d'extension et de zones de retrait. Dans cette configuration, le profil des portions de face d'appui du second profilé, situées de part et d'autre de la ou des rainures, est complémentaire du profil des portions correspondantes de la face d'appui du premier profilé. Ces excroissances et évidements ont notamment pour fonction d'accroître les zones d'appui des premier et second profilés entre eux.

En conséquence, selon une autre caractéristique du dispositif selon l'invention, la face d'appui de chacun des profilés comporte un ou plusieurs reliefs choisis parmi des excroissances et des évidements les uns et les autres provenant de la face d'appui de ces profilés.

Différents profils délimités selon une direction perpendiculaire aux bords libres des feuilles de la poche, peuvent être envisagés pour ces excroissances et évidements notamment des profils circulaires. Dans cette configuration, les premier et second profilés, lorsqu'ils sont en appui entre eux, constituent un moyen de maintien élastique des feuilles en appui étanche entre elles lequel est sensible à une pression exercée sur les faces externes des parois du contenant.

Le dispositif de fermeture selon l'invention peut équiper un contenant muni d'un moyen de dépressurisation qui consiste en une pièce tubulaire longiligne réalisée en un matériau perméable à un fluide gazeux, cette pièce tubulaire présentant une pluralité d'ouvertures sur sa longueur lesquelles, par l'intermédiaire de passages ménagés dans la paroi du contenant, met en communication l'intérieur de ce contenant avec l'intérieur de cette pièce tubulaire reliée à un dispositif d'aspiration d'un fluide gazeux.

Cette pièce tubulaire peut être constituée notamment d'un fil enroulé en spirales non jointives.

L'invention sera mieux comprise et d'autres buts, caractéristiques et avantages de celle-ci apparaîtront plus clairement au cours de la description explicative qui va suivre faite en référence aux dessins schématiques annexés donnés uniquement à titre d'exemples non limitatifs illustrant un mode de réalisation de l'invention et dans lesquels :
- la Figure 1 est une représentation d'une coupe transversale d'un contenant selon le plan A-A' perpendiculaire aux bords de ce contenant à la Figure 2, ledit contenant étant équipé du dispositif selon l'invention,
- la Figure 2 est une représentation d'une coupe longitudinale d'un contenant selon le plan B-B' à la Figure 1, ledit contenant étant équipé d'un dispositif selon l'invention,
- la Figure 3 est une représentation d'une coupe transversale du dispositif selon l'invention en position de repos et ce, suivant le plan C-C' à la Figure 2,
- la Figure 4 est une représentation d'une coupe transversale du dispositif selon l'invention en position de travail et ce, suivant le plan C-C' à la Figure 2,
- la Figure 5 est une représentation d'une coupe longitudinale du dispositif selon l'invention suivant le plan D-D' à la Figure 2,
- la Figure 6 est une représentation d'une coupe transversale du dispositif selon l'invention suivant le plan E-E' à la Figure 2,
- les Figures 7 à 9 sont des représentations de coupes transversales de divers modes de réalisation des premier et second profilés.

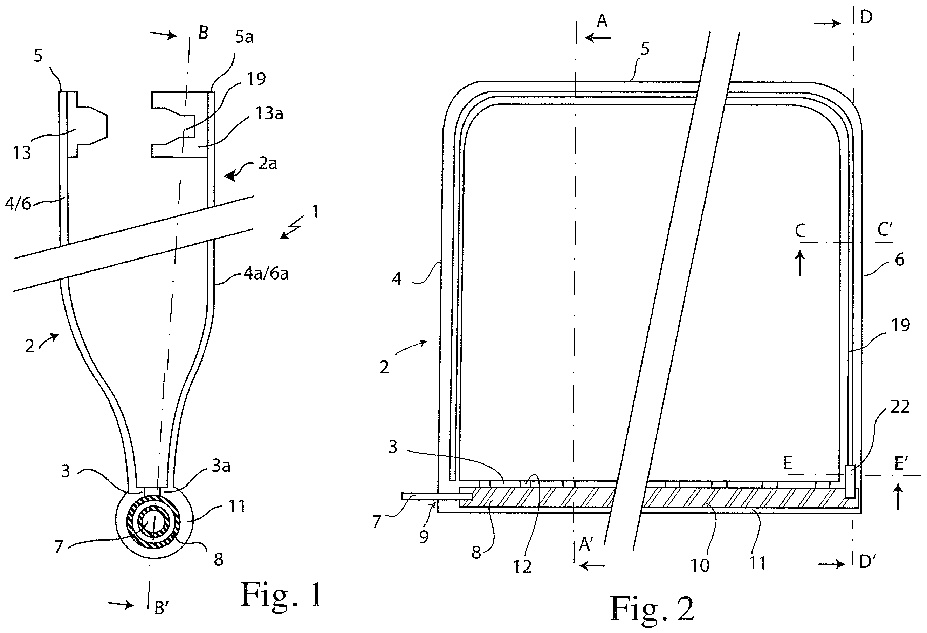

Tel que représenté aux Figures 1 et 2, le contenant 1, par exemple une poche de feuilletage pour l'assemblage de matériaux, comprend les parois extérieures 2, 2a solidarisées entre elles selon une paire de bords 3, 3a. D'autre part, ces parois 2, 2a présentent respectivement les bords 4, 5, 6 et 4a, 5a, 6a, ces trois paires de bords 4, 4a ; 5, 5a et 6, 6a, lorsqu'ils sont libres, laissant apparaître trois fentes pour le chargement ou le déchargement de ce contenant. Celui-ci est muni, en outre, d'un premier embout 7 susceptible d'être raccordé d'une part à un dispositif d'aspiration de fluide gazeux (non représenté) et d'autre part à une pièce tubulaire 8 longiligne après passage par l'orifice 9 aménagé dans ce contenant. Cette pièce tubulaire est constituée d'un fil rigide enroulé en spirales non jointives laissant apparaître, sur la totalité de sa longueur, une pluralité d'ouvertures 10. D'autre part, cette pièce 8 est contenue dans un logement 11 qui fait corps avec le contenant, la portion de paroi commune entre celui-ci et le logement le long des bords 3, 3a étant percée d'une pluralité d'orifices 12. Ceux-ci coopèrent avec les ouvertures 10 pour mettre en communication l'intérieur du contenant et l'intérieur de la pièce tubulaire 8 afin de permettre le passage d'un fluide gazeux provenant de ce contenant lors de la dépressurisation de celui-ci.

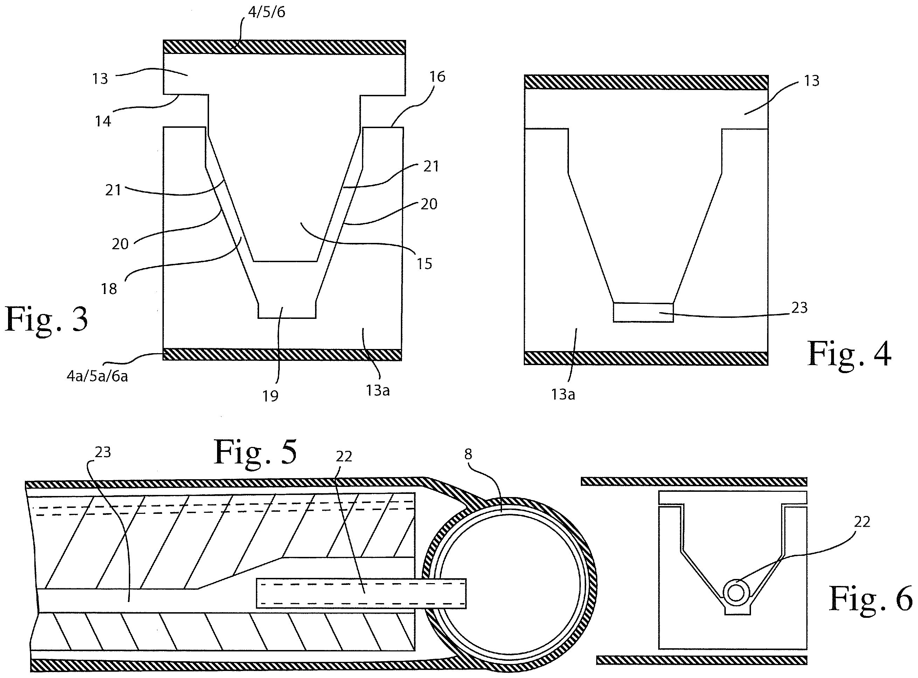

La Figure 1 montre, par ailleurs, deux profilés longilignes 13, 13a situés à proximité immédiate respectivement des bords 4, 5, 6 et 4a, 5a, 6a. Ces profilés sont sensiblement parallèles à ces bords tout en étant de longueur sensiblement égale à ceux-ci. D'autre part, aux Figures 3 et 4, le profilé 13 révèle, issue de sa face d'appui 14, la présence d'une zone d'extension formant une excroissance 15 tandis que le profilé 13a montre, provenant de sa face d'appui 16, une zone de retrait donnant naissance à un évidement 18. La zone distale de cet évidement, par rapport à la face d'appui 14 du profilé 13, laisse apparaître une rainure 19 longiligne sensiblement parallèle aux bords 4a, 5a, 6a. Au surplus, les portions 20 de cette zone de retrait, situées de part et d'autre de la rainure, présentent dans une section transversale du profilé 13a, un profil transversal complémentaire à celui des portions 21 correspondantes de la zone d'extension au niveau du profilé 13.

En outre, on remarque également, à la Figure 2, la présence d'un second embout 22. Celui-ci est apte à mettre en communication, tel que représenté aux Figures 5 et 6, la pièce tubulaire 8 et le conduit de dépressurisation 23 formé au départ de la rainure 19 lorsque les profilés 13 et 13a sont en position de travail c'est-à-dire, comme le montre la Figure 4, lorsque les portions 21 de la zone d'extension sont en appui contre les portions 20 correspondantes de la zone de retrait.

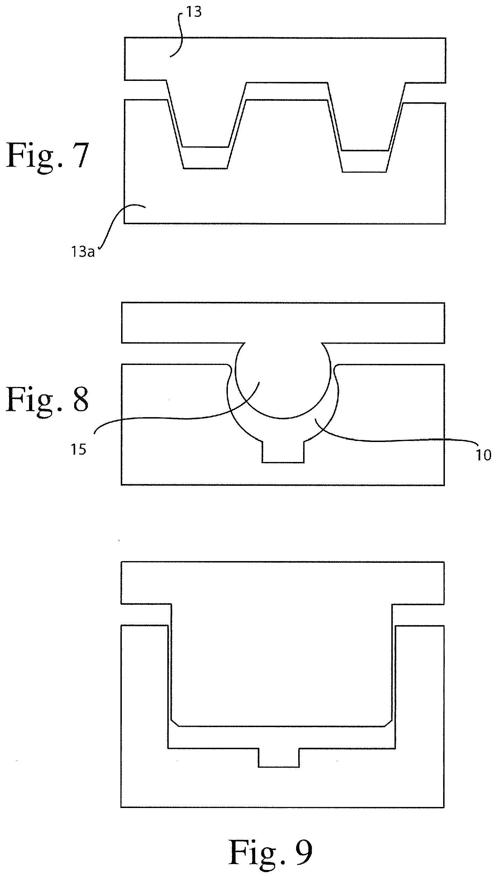

D'autres profils de sections des profilés 13 et 13a, déterminées transversalement c'est-à-dire au droit des bords 4 à 6 et 4a à 6a des parois respectivement 2 et 2a, peuvent être envisagés tels que par exemple les profils illustrés, à titre non limitatif, aux Figures 7 à 9. On observe, à la Figure 8, une excroissance 15 et un évidement 18 chacun de forme circulaire, qui pourront coopérer par emboitement lorsqu'une pression est exercée sur les faces externes des parois du contenant.

A la lumière de ce qui précède, on observe que l'aspiration du fluide gazeux, par exemple l'air, présent dans le contenant provoque la dépressurisation de la totalité du volume libre, à l'intérieur de ce contenant, qui est en relation avec le dispositif d'aspiration. Le fluide gazeux à l'intérieur du conduit 23 créé par la mise en appui entre eux des profilés 13 et 13a étant éliminé, la dépressurisation résultante de ce conduit amène le profilé 13 à pénétrer dans le profilé 13a et à venir en appui ferme contre ce profilé 13a assurant ainsi l'étanchéité souhaitée de l'ensemble formé par le contenant et ces deux profilés.

## Revendications

1. Procédé pour la fermeture étanche d'un contenant (1) à parois souples destiné à être dépressurisé, du genre constitué de deux feuilles (2, 2a) superposées et assemblées de manière étanche selon une paire de bords (3, 3a) et présentant au moins une fente de chargement et de déchargement formée entre au moins une paire de bords libres (4, 4a ; 5, 5a ; 6, 6a) et sensiblement parallèles de ces feuilles, chaque paire de bords libres comprenant, situés en regard l'un de l'autre, un bord de chacune de ces feuilles, ce contenant comprenant un moyen (13, 13a) de maintien desdites feuilles en appui étanche entre elles lequel est disposé sur leurs faces internes, parallèle aux bords libres qui déterminent la ou les fentes de chargement et de déchargement et à proximité de ceux-ci, **caractérisé en ce que** l'on dépressurise un ou plusieurs conduits (23) créés dans ce moyen d'étanchéité lorsque celui-ci est en position de travail.

2. Procédé selon la revendication 1, **caractérisé en ce que** la dépressurisation du ou des conduits est obtenue conjointement avec la dépressurisation du contenant ou séparément de celle-ci.

3. Procédé selon la revendication 1 ou 2, **caractérisé en ce que** le contenant est une poche destinée au feuilletage de matériaux.

4. Dispositif de fermeture étanche d'un contenant autonome à parois souples destiné à être dépressurisé, du genre constitué de deux feuilles (2, 2a) superposées et assemblées de manière étanche selon une paire de bords (3, 3a) et présentant au moins une fente de chargement et de déchargement formée entre au moins une paire de bords libres (4, 4a ; 5, 5a ; 6, 6a) et sensiblement parallèles de ces feuilles, chaque paire de bords libres comprenant, situés en regard l'un de l'autre, un bord de chacune de ces feuilles, ce contenant comprenant un moyen (13, 13a) de maintien desdites feuilles en appui étanche entre elles lequel est disposé sur leurs faces internes, parallèle aux bords libres qui déterminent la ou les fentes de chargement et de déchargement et à proximité de ceux-ci, **caractérisé en ce que** le moyen d'étanchéité, en position de travail, est parcouru par un ou plusieurs conduits (23) aptes à être dépressurisés lorsqu'ils sont reliés à une source de dépressurisation.

5. Dispositif de fermeture selon la revendication 4, **caractérisé en ce que** le moyen d'étanchéité comprend un premier profilé (13) longiligne comportant une face d'appui (14) et un second profilé (13a) longiligne comportant une face d'appui (16) parcourue, en position de repos, par une ou plusieurs rainures (19) longilignes qui, lorsque ces faces d'appui coopèrent entre elles, créent le ou lesdits conduits (23) de dépressurisation.

6. Dispositif de fermeture selon la revendication 5, **caractérisé en ce que** les deux profilés occupant une position de travail, la face d'appui du premier profilé se trouve en contact intime avec la totalité de la face d'appui du second profilé à l'exception de la surface interne de la ou des rainures pratiquées dans ce second profilé, ce qui crée le ou les conduits de dépressurisation.

7. Dispositif de fermeture selon les revendications 5 ou 6, **caractérisé en ce que** la longueur des premier et second profilés équivaut sensiblement à la longueur des bords de la fente.

8. Dispositif de fermeture selon l'une des revendications 5 à 7, **caractérisé en ce que** la face d'appui de chacun des profilés comporte un ou plusieurs reliefs choisis parmi des excroissances (15) et des évidements (18) les uns et les autres provenant de la face d'appui de ces profilés.

9. Dispositif de fermeture selon l'une des revendications 5 à 8, **caractérisé en ce que** le profil transversal des portions de face d'appui du second profilé situées de part et d'autre de la ou des rainures est complémentaire du profil transversal des portions correspondantes de la face d'appui du premier profilé.

10. Dispositif de fermeture selon l'une des revendications 5 à 9, **caractérisé en ce que** les premier et second profilés, lorsqu'ils sont en contact, sont sensibles à une pression exercée sur les faces externes des parois du contenant.

11. Dispositif de fermeture selon l'une des revendications 4 à 10, **caractérisé en ce que** le contenant est une poche destinée au feuilletage de matériaux.

12. Dispositif de fermeture selon l'une des revendications 4 à 11, **caractérisé en ce qu'**il équipe un contenant muni d'un moyen de dépressurisation.

13. Dispositif de fermeture selon la revendication 12, **caractérisé en ce que** le moyen de dépressurisation consiste en une pièce tubulaire longiligne réalisée en un matériau perméable à un fluide gazeux, cette pièce tubulaire présentant une pluralité d'ouvertures (10) sur sa longueur lesquelles, par l'intermédiaire de passages (12) ménagés dans la paroi du contenant, met en communication l'intérieur de ce contenant avec l'intérieur de cette pièce tubulaire reliée à un dispositif d'aspiration d'un fluide gazeux.

## Patentansprüche

1. Verfahren zum dichten Verschließen eines Behälters (1) mit flexiblen Wänden, der dazu bestimmt ist, mit Unterdruck beaufschlagt zu werden, von der Art bestehend aus zwei Folien (2, 2a), welche übereinander angeordnet und auf dichte Weise entlang eines Paares von Rändern (3, 3a) zusammengefügt sind, und mit wenigstens einem Schlitz zum Beladen und Entladen, welcher zwischen wenigstens einem Paar von freien und im Wesentlichen parallelen Rändern (4, 4a; 5, 5a; 6, 6a) dieser Folien ausgebildet ist, wobei ein jedes Paar von freien Rändern einander gegenüberliegend einen Rand von jeder dieser Folien umfasst, wobei dieser Behälter ein Mittel (13, 13a) zum Halten der Folien in dichter Anlage untereinander umfasst, das auf ihren Innenseiten angeordnet ist, parallel zu den freien Rändern, die den oder die Belade- und Entladeschlitze bestimmen, sowie in der Nähe dieser, **dadurch gekennzeichnet, dass** eine oder mehrere Leitungen (23), welche in diesem Dichtungsmittel erzeugt werden, wenn dieses sich in der Arbeitsstellung befindet, mit Unterdruck beaufschlagt werden.

2. Verfahren nach Anspruch 1, **dadurch gekennzeichnet, dass** die Unterdruckbeaufschlagung der Leitung oder Leitungen zusammen mit der Unterdruckbeaufschlagung des Behälters oder getrennt von dieser erreicht wird.

3. Verfahren nach Anspruch 1 oder 2, **dadurch gekennzeichnet, dass** der Behälter eine Tasche ist, die für die Laminierung von Materialien bestimmt ist.

4. Vorrichtung zum dichten Verschließen eines unabhängigen Behälters mit flexiblen Wänden, der dazu bestimmt ist, mit Unterdruck beaufschlagt zu werden, von der Art bestehend aus zwei Folien (2, 2a), welche übereinander angeordnet und auf dichte Weise entlang eines Paares von Rändern (3, 3a) zusammengefügt sind, und mit wenigstens einem Schlitz zum Beladen und Entladen, welcher zwischen wenigstens einem Paar von freien und im Wesentlichen parallelen Rändern (4, 4a; 5, 5a; 6, 6a) dieser Folien ausgebildet ist, wobei ein jedes Paar von freien Rändern einander gegenüberliegend einen Rand von jeder dieser Folien umfasst, wobei dieser Behälter ein Mittel (13, 13a) zum Halten der Folien in dichter Anlage untereinander umfasst, das auf ihren Innenseiten angeordnet ist, parallel zu den freien Rändern, die den oder die Belade- und Entladeschlitze bestimmen, sowie in der Nähe dieser, **dadurch gekennzeichnet, dass** das Dichtungsmittel in der Arbeitsstellung von einer oder mehreren Leitungen (23) durchzogen ist, welche geeignet sind, mit Unterdruck beaufschlagt zu werden, wenn sie mit einer Quelle zur Unterdruckbeaufschlagung verbunden sind.

5. Schließvorrichtung nach Anspruch 4, **dadurch gekennzeichnet, dass** das Dichtungsmittel ein erstes langgestrecktes Profil (13) mit einer Anlageseite (14) und ein zweites langgestrecktes Profil (13a) mit einer Anlageseite (16) umfasst, welche in der Ruhestellung von einer oder mehreren langgestreckten Nuten (19) durchzogen ist, die, wenn diese Anlageseiten untereinander zusammenwirken, die Leitung oder Leitungen (23) zur Unterdruckbeaufschlagung erzeugen.

6. Schließvorrichtung nach Anspruch 5, **dadurch gekennzeichnet, dass** wenn die beiden Profile eine Arbeitsstellung einnehmen, die Anlageseite des ersten Profils sich mit der gesamten Anlageseite des zweiten Profils in innigem Kontakt befindet, mit Ausnahme der Innenfläche der in diesem zweiten Profil ausgebildeten Nut oder Nuten, was die Unterdruckbeaufschlagungsleitung oder -leitungen erzeugt.

7. Schließvorrichtung nach den Ansprüchen 5 oder 6, **dadurch gekennzeichnet, dass** die Länge des ersten und des zweiten Profils im Wesentlichen der Länge der Ränder des Schlitzes entspricht.

8. Schließvorrichtung nach einem der Ansprüche 5 bis 7, **dadurch gekennzeichnet, dass** die Anlageseite von jedem der Profile ein oder mehrere Reliefs, die aus Ausstülpungen (15) und Ausnehmungen (18) ausgewählt sind, umfasst, wobei die einen und die anderen aus der Anlageseite dieser Profile hervorgehen.

9. Schließvorrichtung nach einem der Ansprüche 5 bis 8, **dadurch gekennzeichnet, dass** das Querprofil der Anlageseite-Abschnitte des zweiten Profils, welche auf beiden Seiten der Nut oder Nuten gelegen sind, zu dem Querprofil der entsprechenden Abschnitte der Anlageseite des ersten Profils ergänzend ist.

10. Schließvorrichtung nach einem der Ansprüche 5 bis 9, **dadurch gekennzeichnet, dass** das erste und das zweite Profil, wenn sie in Kontakt sind, gegenüber einem auf die Außenseiten der Wände des Behälters ausgeübten Druck empfindlich sind.

11. Schließvorrichtung nach einem der Ansprüche 4 bis 10, **dadurch gekennzeichnet, dass** der Behälter eine Tasche ist, welche für die Laminierung von Materialien bestimmt ist.

12. Schließvorrichtung nach einem der Ansprüche 4 bis 11, **dadurch gekennzeichnet, dass** ein mit einem Mittel zur Unterdruckbeaufschlagung versehener Behälter mit ihr ausgestattet ist.

13. Schließvorrichtung nach Anspruch 12, **dadurch gekennzeichnet, dass** das Mittel zur Unterdruckbeaufschlagung aus einem langgestreckten, rohrförmigen Teil besteht, das aus einem für ein gasförmiges Fluid durchlässigen Material gefertigt ist, wobei dieses rohrförmige Teil eine Vielzahl von Öffnungen (10) über seine Länge aufweist, welche mittels Durchlässen (12), die in der Wand des Behälters ausgebildet sind, den Innenraum dieses Behälters mit dem Innenraum dieses rohrförmigen Teils, das mit einer Vorrichtung zum Absaugen eines gasförmigen Fluids verbunden ist, in Verbindung bringen.

## Claims

1. A method for the sealed closure of a container (1) with flexible walls intended to be depressurized, of the type made up of two superimposed sheets (2, 2a) assembled sealably along a pair of edges (3, 3a) and having at least one loading and unloading slit formed between at least one pair of free edges (4, 4a; 5, 5a; 6, 6a) and substantially parallel to these sheets, each pair of free edges comprising, situated across from one another, an edge of each of these sheets, this container comprising a means (13, 13a) for keeping said sheets bearing sealably together that is positioned on their inner faces, parallel to the free edges that determine the loading and unloading slit(s) and near the latter, **characterized in that** depressurization is done of one or several conduits (23) created in this sealing means when the latter is in the working position.

2. The method according to claim 1, **characterized in that** the depressurization of the conduit(s) is obtained jointly with the depressurization of the container or separately therefrom.

3. The method according to claim 1 or 2, **characterized in that** the container is a pouch intended for laminating materials.

4. A device for the sealed closure of an autonomous container with flexible walls intended to be depressurized, of the type made up of two superimposed sheets (2, 2a) assembled sealably along a pair of edges (3, 3a) and having at least one loading and unloading slit formed between at least one pair of free edges (4, 4a; 5, 5a; 6, 6a) and substantially parallel to these sheets, each pair of free edges comprising, situated across from one another, an edge of each of these sheets, the container comprising a means (13, 13a) for keeping said sheets sealably bearing together that is positioned on their inner faces, parallel to the free edges that determine the loading and unloading slit(s) and close thereto, **characterized in that** the sealing means, in the working position, is traveled by one or several conduits (23) able to be depressurized when they are connected to a depressurization source.

5. The closure device according to claim 4, **characterized in that** the sealing means comprises a first longilineal profile (13) including a bearing face (14) and a second longilineal profile (13a) including a bearing face (16) traveled, in the idle position, by one or several longilineal slots (19), which, when the bearing faces cooperate with one another, create the depressurization conduit(s) (23).

6. The closure device according to claim 5, **characterized in that** the two profiles occupying a working position, the bearing face of the first profile is in close contact with the entire bearing face of the second profile with the exception of the inner surface of the slot(s) formed in this second profile, which creates the depressurization conduit(s).

7. The closure device according to claims 5 or 6, **characterized in that** the length of the first and second profiles is substantially equivalent to the length of the edges of the slot.

8. The closure device according to one of claims 5 to 7, **characterized in that** the bearing face of each of the profiles includes one or several reliefs chosen from among protuberances (15) and recesses (18) each coming from the bearing face of these profiles.

9. The closure device according to one of claims 5 to 8, **characterized in that** the transverse profile of the bearing face portions of the second profile situated on either side of the slot(s) is complementary to the transverse profile of the corresponding portions of the bearing face of the first profile.

10. The closure device according to one of claims 5 to 9, **characterized in that** when the first and second profiles are in contact, they are sensitive to pressure exerted on the outer faces of the walls of the container.

11. The closure device according to one of claims 4 to 10, **characterized in that** the container is a pouch intended for laminating materials.

12. The closure device according to one of claims 4 to 11, **characterized in that** it equips a container provided with a depressurization means.

13. The closure device according to claim 12, **characterized in that** the depressurization means consist of a longilineal tubular piece made from a material that is permeable to a gaseous fluid, this tubular piece having a plurality of openings (10) over its length, which, via passages (12) arranged in the wall of the container, place the inside of this container in communication with the inside of this tubular piece connected to a device for aspirating a gaseous fluid.
